# EUROPÄISCHE PATENTSCHRIFT

(11) **EP 0 615 077 B1**
(45) Veröffentlichungstag und Bekanntmachung des Hinweises auf die Patenterteilung: **05.11.1997**
(21) Anmeldenummer: 94250013.3
(22) Anmeldetag: 25.01.1994
(51) Int. Cl.: F16H 47/04, B60K 7/00

(54) **Antrieb mit zwei Hydromotoren**
Power transmission with two hydraulic engines
Transmission équipée de deux moteurs hydrauliques

(30) Priorität: 08.03.1993 DE 4307616
(43) Veröffentlichungstag der Anmeldung: 14.09.1994
(73) Patentinhaber: MANNESMANN Aktiengesellschaft, 40213 Düsseldorf (DE)
(72) Erfinder: Pfordt, Hartwig, Ing. (grad.), D-58454 Witten (DE)
(74) Vertreter: Meissner, Peter E., Dipl.-Ing.

(56) Entgegenhaltungen:
- DE-A- 1 555 247
- DE-A- 2 101 515
- DE-A- 3 907 633
- DE-B- 1 132 450
- GB-A- 1 221 190
- US-A- 4 368 653
- US-A- 4 930 590

## Beschreibung

Die Erfindung betrifft einen Antrieb mit zwei in paralleler Einspeisung an eine Verstellpumpe angeschlossene und über ein Getriebe auf eine Ausgangswelle wirkende Hydromotore, von denen mindestens einer als Verstellmotor ausgebildet ist.

Nutzfahrzeuge für die Land- und Forstwirtschaft oder im Bauwesen ebenso wie Winden bei Hebezeugen werden häufig von einem hydraulischen Motor über ein Untersetzungsgetriebe angetrieben.

Aus der gattungsbildenden DE-A-1 555247 ist eine Steuereinrichtung für einen stufenlos einstellbaren hydrostatischen Antrieb eines Fahrzeuges bekannt. Dieser Antrieb weist ein Getriebe auf, das über eine Kardanwelle mit der Hinterachse des Fahrzeuges verbunden ist. Das Getriebe selbst besteht aus einer Axialkolbenpumpe und zwei über Saug- und Druckleitungen damit verbundene Axialkolbenmotoren. Ein Axialkolbenmotor ist fest mit der Kardanwelle verbunden. Dagegen wirkt der zweite Axialkolbenmotor durch ein Vorgelege und eine ausrückbare Kupplung auf die Kardanwelle, wobei die Kupplung in einem Hohlrad des Vorgeleges angeordnet ist. Zum Antrieb der Hinterachse wirkt die Kardanwelle mit einem in der Hinterachse angeordneten Kegelradumlaufgetriebe zusammen.

Aus der Schrift DE OS 3137857 ist eine Einzelrad-Antriebseinheit bekannt, bei der ein durch einen hydraulischen Motor angetriebenes Planetengetriebe in einem topfförmigen die Nabe eines Fahrzeugs bildenden Außengehäuse angeordnet ist. Mit Antrieben dieser Bauart werden aber in Verbindung mit einer Verstellpumpe relativ geringe Wandlungsverhältnisse erreicht. Dies wirkt sich nachteilig aus bei Fahrzeugen, die beispielsweise beim Umsetzen zu neuen Arbeitsorten öffentliche Verkehrsflächen befahren müssen, wobei diese Strecken in möglichst großer Geschwindigkeit zu überwinden sind.

Weiterhin ist aus DE 39 07 633 A1 ein hydrostatischer Fahrantrieb bekannt, der zwei Hydromotore aufweist, die von einer Verstellpumpe in paralleler Anspeisung getrieben werden. Die Hydromotore, von denen mindestens einer schwenkbar ausgestaltet ist, treiben über Vorgelege eine Ausgangswelle und diese die Achse eines Fahrzeugs an. Zwischen dem Verstellmotor und dem Ausgang ist eine Schaltkupplung vorgesehen. Dabei kann diese Kupplung zwischen dem Vorgelege und dem Ausgang oder zwischen dem Verstellmotor und dem Vorgelege eingebaut sein.

Bezogen auf den Ausgang ist das Übersetzungsverhältnis des schaltbaren Vorgeleges und das des Vorgeleges in der genannten Schrift unterschiedlich gewählt. Während es beim Vorgelege des Konstantmotors etwa gleich ist, wird es als erfindungswesentlich angesehen, das Übersetzungsverhältnis beim schaltbaren Vorgelege, das an den Verstellmotor angeschlossen ist, größer zu wählen.
Bei den bekannten Hydromotoren sind feste Schluckvolumina vorgesehen sowie eine davon abhängige Untersetzung der Ausgangswelle.

Bei dem aus der genannten Schritt bekannten hydrostatischen Fahrantrieb sind die Hydromotore zu beiden Seiten des Vorgeleges angeordnet. Weiterhin sind in nachteiliger Weise für das Vorgelege und für den Achsantrieb eigene Gehause erforderlich.

Gemäß des bei dieser Schritt bekannten Verfahrens wird bei schnellen Übergang des Verstellwinkels des Verstellmotors auf den Winkel alpha=0 gleichzeitig der Ausschwenkwinkel der Fahrantriebspumpe um einen entsprechenden Ausschwenkwinkel zurückgenommen. Zur exakten Kordinierung dieser einzelnen Verfahrensschritte ist ein hoher regeltechnischer Aufwand erforderlich.

Aus der Patentschrift US 3421389 ist ein Antrieb bekannt, bei dem eine Pumpe mehrere parallel zueinander angeordnete Hydraulikmotore antreibt, die wiederum einzeln mit einem Vorgelege in Verbindung stehen. Jeder Motor ist von dem Vorgelege durch eine Kupplung abtrennbar und durch eine Bremse abbremsbar. Anstelle der mechanischen Elemente Kupplung und Bremse wird vorgeschlagen, die Abtrennung der einzelnen Stufen hydraulisch, und zwar durch Ventile durchzuführen.
Aus diesem großvolumig bauenden Antrieb ist weder der Einsatz von Verstellpumpen noch von Verstellmotoren bekannt. Weiterhin erfordert der aufwendig ausgerüstete Antrieb eine Bremse zur Abbremsung des Hydraulikmotors gerade für den Fall, wenn die Antriebswelle des jeweiligen Motors vom Vorgelege abgekuppelt ist. Beim bekannten Einsatz von Hydraulikventilen sind keine Mittel vorgeschlagen, die ein Hochlaufen des hydraulisch entkuppelten Motors verhindern.

Die Erfindung hat sich das Ziel gesetzt, unter Vermeidung der vorgenannten Nachteile einen stufenlosen, Mehrbereichs-Hydroantrieb zu schaffen, der mit konstruktiv einfachen Mitteln kompakt und wenige Bauteile aufweisend hohe Wandlungsverhältnisse erreicht.

Die Erfindung erreicht dieses Ziel durch die kennzeichnenden Merkmale des Patentanspruchs 1.

Der vorgeschlagene Antrieb bildet eine kompakte Einheit bestehend aus den Baugruppen Hydraulik, Vorgelege und Abtrieb. Die Hydromotoren des hydraulischen Antriebes sind auf einer Seite des Vorgeleges vorgesehen, wobei deren Antriebswellen koaxial zueinander angeordnet sind. Der als Verstellmotor ausgebildete Hydromotor ist dabei an eine zentrale Welle angeschlossen, die unmittelbar mit einem auf der gegenüberliegenden Seite des Vorgelegegehäuses angeordneten Antriebselement in Verbindung steht. Das Antriebselement ist dabei als Turas, als Rad oder auch als Winde ausgestaltet.

An der zentralen Welle, im Übergang von der Antriebswelle des Verstellmotors zur Abtriebswelle des Abtriebselementes ist eine Kupplung vorgesehen. Die Kupplung wird umhüllt von einem Stirnrad, das mit einem weiteren Stirnrad kämmt, welches von dem zweiten Hydromotor angetrieben wird.

Der Antrieb kommt dabei nicht nur mit einem Minimum von einfachen Bauteilen aus, er trennt auch konsequent den hydraulischen Antriebsteil einschließlich seiner Steuerung vom mechanischen Abtriebsteil.
Bei der Verwendung eines Planetengetriebes im Abtriebselement ist in vorteilhafter Weise die Lagerung des Abschlußsteges im Gehäuse des Vorgeleges vorgesehen. Hierdurch entsteht ein insgesamt robuster und durch die geringe Anzahl von Bauteilen wartungsfreundlicher Antrieb.

Bei einer Auslegung des Verstellmotors als Nullhubmotor besteht die Möglichkeit, das Abtriebselement über den zweiten Hydromotor anzutreiben. Dieser ist wiederum als Verstellmotor auslegbar, so daß bei dieser Kombination über einen der beiden Hydromotore der Antrieb erfolgen kann, ohne daß weitere mechanische Trennelemente außer der bereits vorgesehenen Kupplung erforderlich sind.

Im Hydraulikkreislauf sind Elemente vorgesehen, die die Einspeisung des jeweils außer Betrieb befindlichen Hydromotors absperren. Zum Einsatz kommen 4/2 -Wegeventile oder Steuergeräte für die als Nullhubmotore ausgebildeten Verstellmotoren. Mit diesen Elementen läßt sich einfach und sicher der nicht benötigte Hydromotor abschalten und schadensfrei, also ohne die Gefahr, daß der Motor lastfrei weiterdreht und die zulässige Drehzahl übersteigt, stillsetzen. Durch diesen Einsatz der vorgeladenen Steuerelemente besteht die Möglichkeit, den Fahrantrieb in drei Geschwindigkeitsbereichen (Betrieb nur des Hydromotors 12. Betrieb nur des Hydromotors 13 sowie Betrieb beider Motoren 12 und 13) zu betreiben.

Hiermit wird eine langgestellte Forderung der Industrie erfüllt, Fahrzeuge in mindestens zwei deutlich unterschiedlichen Geschwindikeitsbereichen fahren zu können. Als Beispiel seien hier Straßendeckenfertiger genannt, die in kürzestmöglicher Zeit zu anderen Arbeitsorten einsetzbar seien sollen.

Die mit solchen Getrieben ausgestatteten Flurförderzeuge oder Hebezeuge können in einem weiten Wandlungsverhältnis stufenlos mit dem gesamten Fahrbereich durchfahren und damit unter Schonung der mechanischen und hydraulischen Bauteile den Erfordernissen, sei es hohe Geschwindigkeit während einer überstellfahrt oder hohe Drehmomente während der Arbeitsphase beliebig anpassen.

Eine besondere Kühlerauslegung, wie sie bei dem hohen Wärmeanfall konventioneller Antriebe während der Hochgeschwindigkeitsphase anfällt, ist hierbei nicht erforderlich.

Das Planetengetriebe kann ein- oder mehrstufig ausgebildet sein.
An der Ausgangswelle ist eine vorzugsweise mechanisch ausgebildete Bremse vorgesehen. Sie dient der mechanischen Arretierung des Antriebes und ist auch funktionsfähig, wenn Defekte im hydraulischen Teil des Antriebes auftreten. Dies ist von besonderer Wichtigkeit beim Einsatz des erfindungsgemäßen Antriebes bei Winden.

Ein Beispiel der Erfindung ist in der Zeichnung dargelegt. Es zeigt:

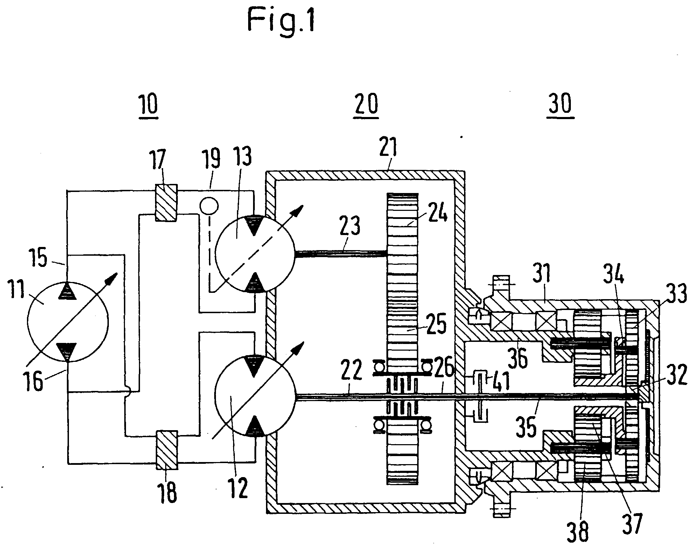

- Fig. 1: ein Schema des erfindungsgemäßen Antriebs.

In den Vorlauf 15 und Rücklauf 16 sind hydraulische Ventile 17 bzw. 18 anordbar. Es handelt sich hier um 4/2 -Wegeventile, bei denen in geschlossener Stellung der Motorkreislauf kurzgeschlossen und der Pumpenkreislauf abgeschlossen wird. Als Steuerelement zur Absperrung des Hydraulikkreislaufes 15 und 16 ist bei Verwendung von Nullhubmotoren für die Hydromotoren 12 und 13 ein Steuerteil 19 einsetzbar.

So ist beispielsweise beim Auskuppeln der Kupplung 26 und somit der Trennung des Hydromotors 13 vom Abtrieb 30 mit Hilfe des Steuerteils 19 auf den Winkel alpha = 0 Grad zu schwenken bzw. das Hydraulikventil 17 zu schließen.

In der Figur 1 sind die Baugruppen des Kompaktantriebes, nämlich Antrieb, Vorgelege und Abtrieb mit den Zehnerziffern 10, 20 und 30 positioniert. Der Antrieb 10 weist dabei eine in ihrem Hubvolumen verstellbare Pumpe 11 auf, die über Vorläufe 15 und Rückläufe 16 mit einem verstellbaren Hydromotor 12 sowie einem zweiten Hydromotor 13 verbunden sind.

Das Vorgelege 20 besitzt das Gehause 21, durch das eine durchgehende Welle mit den Wellenteilen Antriebswelle 22 und Ausgangswelle 35 geführt ist. Parallel zur Antriebswelle 22 ist im Gehäuse 21 kopfendig ein Stirnrad 24 aufweisende Antriebswelle 23 vorgesehen. Das Stirnrad 24 kämmt mit einem hohlen Zahnrad 25, welches Kupplungsteile 26 aufweist, die mit entsprechenden Kupplungsteilen kuppelbar sind, die auf der durchgehenden Welle 22, 35 angeordnet sind. Das Stirnrad 24 weist dabei zum hohlen Zahnrad 25 ein Untersetzungsverhältnis von 1 : 1,5 bis 1 : 4,5 auf.

Die Hydromotoren 12 und 13 sind in der Weise auf einer Seite des Gehäuses 21 in der Weise angeordnet, daß sie so weit wie möglich in dieses hineinragen.

Das Abtriebselement 30, welches eine Winde, ein Turas oder die Nabe eines Rades sein kann, besitzt ein topfförmiges Gehäuse 31. In das Gehäuse 31 ragt die Ausgangswelle 35 hinein, welche kopfendig ein Stirnrad 32 besitzt.

Dieses Stirnrad 32 ist das Sonnenrad eines Planetengetriebes, welches in der Figur 1 zweistufig ausgebildet ist. Das Sonnenrad 32 kämmt mit den Planetenrädern 33, die über einen Steg 34 mit einem, die Ausgangswelle 35 umgreifenden Sonnenrad 37 verbunden sind. Das Sonnerad 37 kämmt wiederum mit Planetenrädern 38, deren Anschlußstege im Gehäuse 21 gelagert sind.

An der Ausgangswelle 35 sind Teile einer Bremse 41 vorgesehen, die mit an der Außenseite des Gehäuses 21 befestigten Bremsteil zusammenwirken.

### Positionsliste:

- 10: Antrieb
- 11: Pumpe
- 12: verstellbarer Hydromotor
- 13: Hydromotor
- 14: Verstelleinrichtung
- 15: Vorlauf
- 16: Rücklauf
- 17: Ventil
- 18: Ventil
- 19: Steuerungsteil
- 20: Vorgelege
- 21: Gehäuse
- 22: Antriebswelle zu 12
- 23: Antriebswelle zu 13
- 24: Stirnrad
- 25: hohles Zahnrad
- 26: Kupplung
- 30: Antriebselement
- 31: topfförmiges Gehäuse
- 32: Ritzel/Planetenrad
- 33: Stirnrad/Sonnenrad
- 34: Steg
- 35: Ausgangswelle
- 36: Abschlußsteg
- 37: hohles Sonnenrad
- 38: Planetenräder
- 41: Bremse

## Patentansprüche

1. Antrieb mit zwei in paralleler Einspeisung an eine Verstellpumpe (11) angeschlossenen und an ein Getriebe auf eine Ausgangswelle wirkende Hydromotoren (12, 13), die achsparall und auf einer Seite eines Vorgeleges der Ausgangswelle gegenüberliegend angeordnet sind, und von denen mindestens einer als Verstellmotor ausgebildet ist, wobei ein als Verstellmotor ausgebildeter erster Hydromotor (12) eine Antriebswelle (22) aufweist, die in die Ausgangswelle (35) übergeht, und im Übergang von der Antriebswelle zur Ausgangswelle eine Kupplung (26) vorgesehen ist, die von einem hohlen Rad (25) eines Vorgeleges umfaßt wird, welches mit einem von dem zweiten Hydromotor angetriebenen Stirnrad kämmt,
**dadurch gekennzeichnet,**
daß die Hydromotoren außen Betrieb gebracht werden können,
daß die Ausgangswelle (35) kopfendig über ein Stirnrad (32) und ein Ritzel (33) mit einem topförmigen Gehäuse (31) eines als Planetengetriebe ausgebildeten Antriebselementes (30) verbunden ist, welches einen Abschlußsteg (36) besitzt, der im Vorgelegegehäuse (21) gelagert ist, und daß Elemente (17, 18 oder 19) vorgesehen sind, mit denen der Vorlauf (15) und der Rücklauf (16) der hydraulischen Einspeisung des außer Betrieb befindlichen Hydromotors (12 oder 13) absperrbar sind.

2. Antrieb nach Anspruch 1,
**dadurch gekennzeichnet,**
daß die Elemente (17, 18) Hydraulikventile in der Form von 4/2-Wegeventilen sind, die mit den als Verstellmotore ausgebildeten Hydromotoren (12, 13) verbunden sind.

3. Antrieb nach Anspruch 1,
**dadurch gekennzeichnet,**
daß die Elemente (19) Steuergeräte der als Nullhubmotoren ausgebildeten Hydromotoren (12, 13) sind.

4. Antrieb nach Anspruch 2 oder 3,
**dadurch gekennzeichnet**,
daß die auf der dem Antriebselement (30) gegenüberliegenden Seite angeordneten Hydromotoren (12, 13) zum Teil in das Vorgelegegehäuse (21) hineinragen.

5. Antrieb nach Anspruch 1,
**dadurch gekennzeichnet**,
daß an der Ausgangswelle (35) sich an der Außenseite des Vorgelegegehäuses (21) abstützend eine Bremse (41) vorgesehen ist.

6. Antrieb nach Anspruch 1,
**dadurch gekennzeichnet,**
daß das topfförmige Gehäuse (31) die Trommel einer Winde ist.

7. Antrieb nach Anspruch 1,
**dadurch gekennzeichnet**,
daß das topfförmige Gehäuse (31) der Turas oder das Rad eines Landfahrzeugs ist.

## Claims

1. A drive, comprising two hydraulic engines (12, 13) connected in parallel feed to a variable-displacement pump (11) and acting on a gear system on an output shaft, which engines are paraxial and are arranged opposite one another on one side of a transmission of the output shaft, and at least one of which is designed as a variable-displacement engine, with a first hydraulic engine (12) designed as a variable-displacement engine having a drive shaft (22) which merges into the output shaft (35), and a clutch (26) being provided in the transition from the drive shaft to the output shaft, which clutch is surrounded by a hollow wheel (25) of a transmission which meshes with a spur wheel driven by the second hydraulic engine,
characterised in that
the hydraulic engines can be taken out of operation, that the output shaft (35) is connected at the head end via a spur wheel (32) and a pinion (33) to a pot-shaped housing (31) for a drive element (30) designed as a planetary gear, which has a closing crosspiece (36) which is mounted in the transmission housing (21), and that elements (17, 18 or 19) are provided by means of which the feed line (15) and the return line (16) of the hydraulic feed of the hydraulic engine (12 or 13) which is out of operation can be shut off.

2. A drive according to Claim 1, characterised in that the elements (17, 18) are hydraulic valves in the form of 4/2-path valves which are connected to the hydraulic engines (12, 13) designed as variable-displacement engines.

3. A drive according to Claim 1, characterised in that the elements (19) are control instruments of the hydraulic engines (12, 13) which are designed as zero-stroke engines.

4. A drive according to Claim 2 or 3, characterised in that the hydraulic engines (12, 13) located on the side opposite the drive element (30) partially project into the transmission housing (21).

5. A drive according to Claim 1, characterised in that a brake (41) is provided on the output shaft (35), supported on the outside of the transmission housing (21).

6. A drive according to Claim 1, characterised in that the pot-shaped housing (31) is the drum of a winch.

7. A drive according to Claim 1, characterised in that the pot-shaped housing (31) is the tumbler or the wheel of a land vehicle.

## Revendications

1. Entraînement, comportant deux moteurs hydrauliques (12,13) raccordés, en alimentation parallèle, à une pompe à cylindrée variable (11) et agissant, au niveau d'une transmission, sur un arbre de sortie, moteurs qui sont agencés parallèlement à l'axe et de façon opposée sur un côté d'une transmission intermédiaire de l'arbre de sortie, et desquels au moins l'un est réalisé comme moteur à cylindrée variable, un premier moteur hydraulique (12) réalisé comme moteur à cylindrée variable présentant un arbre d'entraînement (22) qui se poursuit dans l'arbre de sortie (35) et, à la transition de l'arbre d'entraînement à l'arbre de sortie, il est prévu un accouplement (26) qui est entouré par une roue creuse (25) d'une transmission intermédiaire, laquelle est en engrènement avec une roue droite entraînée par le second moteur hydraulique,
caractérisé en ce que les moteurs hydrauliques peuvent être amenés hors service, en ce que l'arbre de sortie (35) est relié, du côté de tête, par l'intermédiaire d'une roue droite (32) et d'un pignon (33), à un carter (31) en forme de creuset d'un élément d'entraînement (30) réalisé comme engrenage planétaire, lequel possède une pièce d'extrémité (36) qui est montée dans le carter (21) de la transmission intermédiaire, et en ce que des éléments (17,18 ou 19) sont prévus grâce auxquels l'amenée (15) et le retour (16) de l'alimentation hydraulique du moteur hydraulique (12 ou 13) se trouvant hors service peuvent être coupés.

2. Entraînement selon la revendication 1,
caractérisé en ce que les éléments (17,18) sont des valves hydrauliques sous la forme de distributeurs 4/2, qui sont reliés aux moteurs hydrauliques (12,13) réalisés comme moteurs à cylindrée variable.

3. Entraînement selon la revendication 1,
caractérisé en ce que les éléments (19) sont des appareils de commande des moteurs hydrauliques (12,13) réalisés comme moteurs à course nulle.

4. Entraînement selon la revendication 2 ou 3,
caractérisé en ce que les moteurs hydrauliques (12,13), agencés sur le côté opposé à l'élément d'entraînement (30), pénètrent en partie dans le carter (21) de la transmission intermédiaire.

5. Entraînement selon la revendication 1,
caractérisé en ce qu'un frein (41) est prévu, sur l'arbre de sortie (35), s'appuyant sur la face externe du carter (21) de la transmission intermédiaire.

6. Entraînement selon la revendication 1,
caractérisé en ce que le carter (31) en forme de creuset est le tambour d'un treuil.

7. Entraînement selon la revendication 1,
caractérisé en ce que le carter (31) en forme de creuset est le tambour ou la roue d'un véhicule routier.
